(19) Europäisches Patentamt
European Patent Office
Office européen des brevets

(11) **EP 3 882 790 A1**

(12) **DEMANDE DE BREVET EUROPEEN**

(43) Date de publication:
**22.09.2021 Bulletin 2021/38**

(51) Int Cl.:
***G06F 16/906*** (2019.01)

(21) Numéro de dépôt: **21157504.8**

(22) Date de dépôt: **16.02.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **16.03.2020 FR 2002573**

(71) Demandeur: **ORANGE**
**92130 Issy-les-Moulineaux (FR)**

(72) Inventeurs:
• **ELLEUCH, Marwa**
  **92326 CHATILLON CEDEX (FR)**
• **ALAOUI ISMAILI, Oumaima**
  **92326 CHATILLON CEDEX (FR)**
• **LAGA, Nassim**
  **92326 CHATILLON CEDEX (FR)**

(74) Mandataire: **Plasseraud IP**
**66, rue de la Chaussée d'Antin**
**75440 Paris Cedex 09 (FR)**

(54) **PROCÉDÉ ET SYSTÈME DE DÉTECTION D'UN MOTIF COMMUN DANS UN ENSEMBLE DE FICHIERS TEXTE**

(57)  La présente invention concerne un procédé de détection d'un motif commun à deux fichiers texte ($D_1$, $D_2$), comprenant chacun une suite ordonnée de mots, comprenant :
- générer des groupes de mots de même fonction syntaxique, comprenant au moins un mot de chaque fichier texte de sorte que chaque mot d'un groupe est synonyme d'un autre mot du même groupe,
- associer chaque mot d'un fichier texte appartenant à un groupe de mots à une étiquette représentative dudit groupe,
- générer, pour chaque fichier texte, au moins un ensemble dense de mots vérifiant une condition de proximité interne audit fichier texte,
- déterminer au moins un motif commun aux deux fichiers texte, un motif commun incluant un ou plusieurs ensembles de mots partageant la même étiquette et comprenant au moins un mot d'un ensemble dense de mots de chaque fichier texte.

**[Fig. 1]**

FIG. 1

**Description**

**Domaine technique**

Le domaine de l'invention se rapporte à la détection d'un motif commun (connu également sous le terme anglophone « *pattern* ») dans un ensemble de fichiers texte.

Le procédé et le système de détection d'un motif commun visés par la présente invention sont notamment destinés à la classification de fichiers texte, et notamment la classification de courriels dans une messagerie électronique.

**Technique antérieure**

Aujourd'hui, la plupart des techniques de classification de fichiers texte s'appuient sur des éléments de ces fichiers texte spécifiquement dédiés à leur classification, que ce soit un titre, un en-tête ou directement des mots-clés. Ces éléments dédiés à la classification sont aussi plus simplement dénommés « tag ». Dans le cas où les fichiers texte sont des courriels, la classification au sein de la messagerie électronique est par exemple mise en œuvre à l'aide de mots présents dans le champ « objet » des courriels.

La classification des courriels au sein d'une messagerie électronique représente un enjeu technique majeur, notamment en ce qui concerne l'économie des ressources de stockage allouées pour le stockage des courriels.

Toutefois, des procédés de classification de fichiers texte plus élaborés ont été développés pour permettre une classification plus efficace, notamment lorsqu'aucun élément d'un fichier texte n'est spécifiquement dédié à une telle classification. Ces nouveaux procédés sont basés sur la détection de motifs communs au sein d'un ensemble de fichiers texte.

Parmi les techniques de détection de motifs communs, on note par exemple l'algorithme APriori permettant de déterminer des propriétés redondantes dans un ensemble de données et plus généralement l'application de techniques de recherche de règles d'association (plus connues sous l'acronyme anglophone « *FIM* » pour « *Frequent Itemsets Mining* ») au cas particulier de données textuelles. Ces techniques se basent sur la coexistence, au sein de plusieurs fichiers texte, de mêmes mots. Toutefois, les motifs générés à l'aide de telles techniques ne prennent pas en considération les positions relatives des mots communs. La dispersion des mots communs d'un motif rend celui-ci peu pertinent voire inexploitable dans l'optique d'une classification.

Pour remédier à cet inconvénient, de nouvelles techniques s'appuyant sur la détection de séquences de mots prenant en compte l'ordre d'apparition des mots ont été proposées. Toutefois, ces techniques (plus connues sous l'acronyme anglophone « *MWE* » pour « *Multiple Words Expression* ») ne donnent des résultats que très incomplets, en raison du fait qu'un même thème ou objet d'un fichier texte peut être caractérisé par une autre séquence de mots ou plus simplement par les mêmes mots suivant un autre ordre d'apparition.

**Résumé**

La présente invention vient améliorer la situation.

A ce titre, la présente invention concerne un procédé de détection d'un motif commun dans un ensemble de fichiers texte, chaque fichier texte comprenant une suite ordonnée de mots.

Le procédé de détection est mis en œuvre par des moyens informatiques et comprend :

- générer, pour au moins une paire d'un premier et d'un deuxième fichiers texte de l'ensemble de fichiers texte, un ou plusieurs groupes de mots comprenant chacun au moins un mot du premier fichier texte et au moins un mot du deuxième fichier texte, les mots d'un même groupe de mots ayant une même fonction syntaxique, et chaque mot d'un groupe de mots appartenant à un ensemble de mots synonymes pour cette fonction syntaxique d'un autre mot de ce groupe de mots,
- associer à chaque mot d'un groupe de mots généré, une étiquette représentative de ce groupe de mots,
- générer, pour chaque fichier texte parmi les premier et deuxième fichiers texte, au moins un ensemble dense de mots associés à une étiquette et vérifiant une condition de proximité interne à ce fichier texte,
- déterminer au moins un motif commun aux premier et deuxième fichiers texte, un motif commun incluant un ou plusieurs ensembles de mots partageant la même étiquette et comprenant au moins un mot d'un ensemble dense de mots de chaque fichier texte parmi les premier et deuxième fichiers texte.

Le procédé de détection permet de prendre en compte les variations dans les positions relatives et la dispersion des mots communs et de leurs synonymes d'un fichier texte à un autre. La prise en compte de la fonction syntaxique des mots permet de ne pas générer de bruit avec des motifs communs fortuits.

L'ensemble des synonymes d'un mot en fonction de sa fonction syntaxique est déterminé par exemple par une recherche dans une base de données lexicale.

L'utilisation d'une base de données lexicale permet de ne pas passer à côté de motifs communs exprimés par des séquences de mots différentes.

Dans un ou plusieurs modes de réalisation, le procédé de détection comprend en outre un prétraitement au moins des premier et deuxième fichiers texte mis en œuvre avant la génération du ou des groupe de mots.

Le prétraitement comprend une ou plusieurs des opérations suivantes : lemmatisation, détection de mots composés, suppression de mots vides, détection de mots redondants, remplacement de valeurs numériques par une étiquette, remplacement de noms propres par une étiquette et détection et suppression de blocs textuels redondants.

Dans ou plusieurs modes de réalisation, la génération du ou des groupes de mots comprend :

- pour tout mot donné du premier fichier texte, s'il existe un mot du deuxième fichier texte tel que le mot donné du premier fichier texte et le mot du deuxième fichier texte ont la même fonction syntaxique et que l'un parmi le mot donné du premier fichier texte et le mot du deuxième fichier texte appartient à un ensemble de mots synonymes de l'autre pour cette fonction syntaxique, classer le mot donné du premier fichier texte et le mot du deuxième fichier texte dans un même groupe de mots,
- pour tout mot donné du premier ou du deuxième fichier texte, s'il existe un groupe de mots tel que la fonction syntaxique du mot donné est la même que la fonction syntaxique des mots de ce groupe de mots et que le mot donné appartient à l'ensemble de mots synonymes pour la fonction syntaxique d'au moins un des mots de ce groupe de mots, classer le mot donné dans ce groupe de mots, et
- si deux groupes de mots sont identiques, supprimer l'un quelconque des deux groupes de mots.

Par ailleurs, chaque mot d'un fichier texte donné parmi les premier et deuxième fichiers texte est associé à une valeur numérique représentative d'une position de ce mot au sein du fichier texte.

Par exemple, la numérique représentative d'une position d'un mot au sein d'un fichier texte est déterminée en fonction d'un rang du mot donné dans la suite ordonnée de mots du fichier texte.

Ainsi, dans un ou plusieurs modes de réalisation, la génération, pour un fichier texte, d'au moins un ensemble dense de mots de ce fichier texte, est mise en œuvre comme suit :

si la valeur absolue de la différence des valeurs numériques respectivement associées à deux mots est inférieure ou égale à un seuil prédéterminé, classer les deux mots dans un même ensemble dense de mots du fichier texte, sinon, classer les deux mots dans des ensembles denses de mots distincts du fichier texte.

Dans un ou plusieurs modes de réalisation, le procédé de détection comprend en outre la suppression des motifs communs incluant moins de deux ensembles de mots.

Dans un ou plusieurs modes de réalisation, le procédé de détection comprend en outre la mise à jour d'une base de données de motifs par comparaison de chaque ensemble de mots d'un motif commun d'une paire de fichiers texte à chaque ensemble de mots d'un motif commun d'une autre paire de fichiers texte.

Par exemple, la mise à jour de la base de données de motifs comprend : si un ensemble de mots d'un motif commun d'une première paire de fichiers texte est compris dans un ensemble de mots d'un motif commun d'une deuxième paire de fichiers texte, compléter l'ensemble de mots du motif commun de la première paire de fichiers texte avec un ou plusieurs mots manquants issus de l'ensemble de mots du motif commun de la deuxième paire de fichiers texte.

Dans un ou plusieurs modes de réalisation, le procédé de détection comprend en outre le filtrage des motifs communs en fonction d'une fréquence d'apparition de ces motifs communs, un motif commun étant supprimé si sa fréquence d'apparition sur l'ensemble de fichiers texte est inférieure à une fréquence-seuil prédéterminée.

La présente invention concerne également un procédé de classification de fichiers texte comprenant :

- recevoir un ensemble de fichiers texte,
- détecter, pour au moins une paire d'un premier et d'un deuxième fichiers texte de l'ensemble de fichiers texte, au moins un motif commun en utilisant le procédé de détection décrit précédemment,
- stocker chaque motif commun détecté dans une base de données de motifs,
- générer une étiquette, dite label, caractéristique d'un ensemble de motifs stockés au sein de la base de données de motifs, et
- classer chaque fichier texte dans une base de données de fichiers texte en fonction d'un label associé à un ensemble de motifs comprenant au moins un motif détecté dans ce ficher texte.

Typiquement, un ou plusieurs fichiers texte de l'ensemble de fichiers texte sont des courriels et la base de données de fichiers texte est comprise dans une messagerie électronique.

La présente invention concerne aussi un programme informatique comprenant des instructions pour la mise en œuvre du procédé décrit précédemment, que ce soit le procédé de détection ou le procédé de classification, lorsque les instructions sont exécutées par au moins un processeur.

La présente invention concerne en outre un système de détection d'un motif commun dans un ensemble de fichiers texte, chaque fichier texte comprenant une suite ordonnée d'un ou plusieurs mots.

Le système de détection comprend :

- un module d'étiquetage agencé pour générer, pour au moins une paire d'un premier et d'un deuxième fichiers texte de l'ensemble de fichiers texte, un ou plusieurs groupes de mots comprenant chacun au moins un mot du premier fichier texte et au moins un mot du deuxième fichier texte, les mots d'un même groupe de mots ayant une même fonction syntaxique, et chaque mot d'un groupe de mots appartenant à un ensemble de mots synonymes pour cette fonction syntaxique d'un autre mot de ce groupe de mots,
  le module d'étiquetage étant agencé en outre pour associer à chaque mot d'un groupe de mots généré, une étiquette représentative du groupe de mots,
- un module de regroupement agencé pour générer, pour chaque fichier texte parmi les premier et deuxième fichiers texte, au moins un ensemble dense de mots associés à une étiquette et vérifiant une condition de proximité interne au fichier texte,
- un module de corrélation agencé pour déterminer au moins un motif commun aux premier et deuxième fichiers texte, un motif commun incluant un ou plusieurs ensembles de mots partageant la même étiquette et comprenant au moins un mot d'un ensemble dense de mots de chaque fichier texte parmi les premier et deuxième fichiers texte.

Enfin, la présente invention concerne un système de classification de fichiers texte comprenant :

- un module de communication agencé pour recevoir un ensemble de fichiers texte,
- un système de détection d'un motif commun tel que décrit précédemment agencé pour détecter, pour au moins une paire d'un premier et d'un deuxième fichiers texte de l'ensemble de fichiers texte, au moins un motif commun,
- une base de données de motifs agencée pour stocker chaque motif commun détecté,
- un module de labélisation agencé pour générer une étiquette, dite label, caractéristique d'un ensemble de motifs stockés au sein de la base de données de motifs,
- une base de données de fichiers texte agencée pour stocker chaque fichier texte reçu par le module de communication, le fichier texte étant classé au sein de la base de données de fichiers texte en fonction d'un label associé à un ensemble de motifs comprenant au moins un motif détecté dans le fichier texte.

## Brève description des dessins

D'autres caractéristiques, détails et avantages apparaîtront à la lecture de la description détaillée ci-après, et à l'analyse des dessins annexés, sur lesquels :

**[Fig. 1]** illustre un système de classification de fichiers texte selon l'invention ;

**[Fig. 2]** illustre un procédé de classification de fichiers texte selon l'invention ; et

**[Fig. 3]** illustre un procédé de détection d'un motif commun dans un ensemble de fichiers texte selon l'invention.

## Description des modes de réalisation

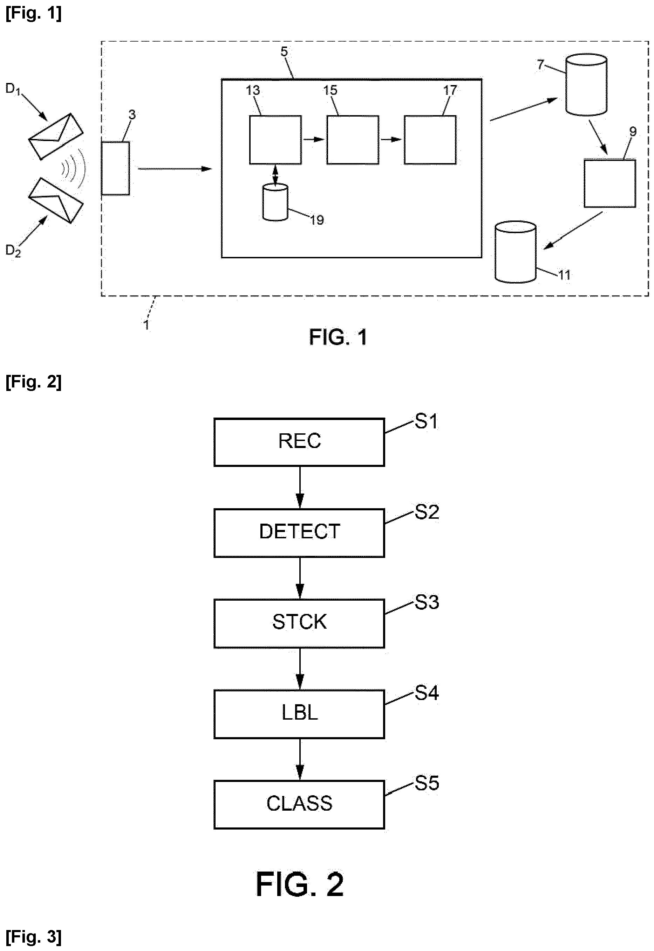

La **[Fig. 1]** illustre un système de classification, ci-après système 1, de fichiers texte.

Le système 1 comprend un module de communication 3, un système de détection, ci-après système de détection 5, d'un motif commun d'un ensemble de fichiers texte, une base de données de motifs 7, un module de labélisation 9 et une base de données de fichiers texte 11.

Dans le contexte de la présente invention, le système 1 est agencé pour mettre en œuvre un procédé de classification de fichiers texte, illustré en **[Fig. 2].**

Le module de communication 3 est agencé pour recevoir un ensemble de fichiers texte. Un fichier texte comprend au moins une suite ordonnée de mots. Les fichiers texte sont par exemple émis à destination du système 1, et plus exactement du module de communication 3, via un réseau (non représenté). Un tel réseau est par exemple un réseau de type LAN (acronyme anglophone pour « *Low Area Network* ») ou de type WAN (acronyme anglophone pour « *Wide Area Network* »).

Il est connu de la personne du métier qu'il existe de nombreux types différents de réseaux de communication de données, par exemple des réseaux de radiocommunication, cellulaires ou non cellulaires, et qu'en fonction du mode de réalisation, le module de communication 3 pourra intégrer un ou plusieurs sous-modules de communication, par exemple de communication radiofréquence et être configuré pour l'émission et la réception de signaux radiofréquences, selon une ou plusieurs technologies, telles que TDMA, FDMA, OFDMA, CDMA, ou un ou plusieurs standards de radiocommunication, tels que GSM, EDGE, CDMA, UMTS, HSPA, LTE, LTE-A, WiFi (IEEE 802.11) et WiMAX (IEEE 802.16), ou leurs variantes ou évolutions, actuellement connus ou développés ultérieurement.

Typiquement, les fichiers texte reçus par le module de communication 3 sont des courriels. Ces courriels peuvent être transmis à destination du module de communication 3 par exemple via un réseau étendu de type Internet ou via un réseau intranet.

Ainsi, dans une première étape S1, le module de communication 3 reçoit un ensemble de fichiers texte. Comme illustré en **[Fig. 1]**, L'ensemble de fichiers texte comprend au moins un premier fichier texte $D_1$ et un deuxième fichier texte $D_2$. Comme expliqué précédemment, le premier fichier texte $D_1$ et le deuxième fichier texte $D_2$ sont par exemple des courriels.

Le module de communication 3 transmet ensuite l'ensemble de fichiers texte reçus, ici en particulier la paire formée des premier et deuxième fichiers texte $D_1$, $D_2$ au système de détection 5.

Le système de détection 5 est agencé pour détecter au moins un motif commun dans l'ensemble de fichiers texte.

Ainsi, dans une étape S2, le système de détection 5 détecte au moins un motif commun dans l'ensemble de fichiers texte, et en particulier au moins un motif commun aux premier et deuxième fichiers texte $D_1$ et $D_2$ de l'ensemble de fichiers texte. Comme expliqué par la suite, un motif détecté par le système de détection 5 comprend un ou plusieurs ensembles de mots.

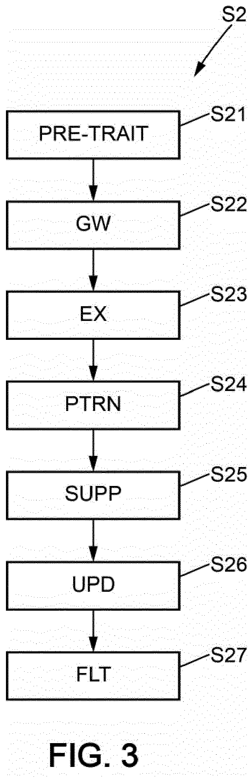

Le système de détection 5 et un procédé de détection d'un motif commun faisant l'objet de l'étape S2 seront décrits ci-après en référence à la **[Fig. 3].**

La base de données de motifs 7 est agencée pour stocker chaque motif commun détecté par le système de détection 5.

Ainsi, dans une étape S3, le système de détection 5 transmet chaque motif détecté à la base de données de motifs 7. Chaque motif commun détecté par le système de détection 5 est ensuite stocké dans la base de données de motifs 7.

Le module de labélisation 9 est agencé pour générer une étiquette, dite label, caractéristique d'un ensemble de motifs stockés au sein de la base de données de motifs 11.

Ainsi, dans une étape S4, le module de labélisation 9 génère, à partir des motifs stockés dans la base de données de motifs 7, un ou plusieurs ensembles de motifs. Pour chaque ensemble de motif généré, le module de labélisation génère un label caractéristique de l'ensemble de motifs généré.

Par ailleurs, l'ensemble de motifs ainsi généré peut être stocké dans la base de données de motifs 7 en association avec le label attribué par le module de labélisation 9.

La base de données de fichiers texte 11 est agencée pour stocker chaque fichier texte reçu pour le module de communication 3. Comme expliqué précédemment, dans un ou plusieurs modes de réalisation, les fichiers texte reçus sont des courriels, auquel cas la base de données de fichiers texte 11 est compris dans une messagerie électronique, par exemple le système 1.

Ainsi, dans une étape S5, chaque fichier texte reçu par le module de communication 3 est stocké au sein de la base de données de fichiers texte 11.

Avantageusement, chaque fichier texte est classé au sein de la base de données de fichiers texte 11 en fonction d'un label associé à un ensemble de motifs comprenant au moins un motif détecté dans le fichier texte.

Autrement dit, sur réception d'un fichier texte donné, le système de détection 5 détecte au moins un motif commun au fichier texte donné et à un autre fichier texte de l'ensemble de fichiers texte. Le motif ainsi détecté est mis en corrélation avec la base de données de motifs 7 pour chercher un ensemble de motifs déjà labélisé et comprenant le motif détecté dans le fichier texte donné. Ainsi, un ou plusieurs labels peuvent être attribués au fichier texte reçu et celui-ci peut être stocké au sein de la base de données de fichiers texte 11 en association avec le ou les labels attribués.

Ainsi, à l'issue du procédé de classification illustré en **[Fig. 2]**, la base de données de fichiers texte 11 comprend un ou plusieurs des fichiers texte reçus, chacun étant stocké en association avec un ou plusieurs labels. Lorsqu'un fichier texte est stocké dans la base de données de fichiers texte 11 en association avec un label donné, cela signifie qu'un motif détecté par le système de détection 5 au sein du fichier texte est compris dans l'ensemble de motifs auquel le module de labélisation 9 a attribué le label en question.

Dans le cas où les fichiers texte reçus sont des courriels et où la base de données de fichiers texte 11 est comprise dans une messagerie électronique, les courriels ainsi reçus sont donc classés à l'aide d'un ou plusieurs labels sur la base de motifs communs, partagés avec d'autres courriels reçus.

Comme expliqué précédemment, le système 1 comprend plusieurs modules, à savoir le module de communication 3 et le module de labélisation 9. Chaque module comprend typiquement une mémoire et un processeur. La mémoire d'un module est agencée pour stocker des instructions dont la mise en œuvre, par le processeur, se traduit par le fonctionnement du module.

Un procédé de détection d'un motif commun dans un ensemble de fichiers texte, mis en œuvre par le système de détection 5 illustré schématiquement en **[Fig. 1]**, va à présent être décrit en référence à la **[Fig. 3]**. Ce procédé de détection est mis en œuvre au cours de l'étape S2 du procédé de classification décrit précédemment.

Pour faciliter la compréhension et de manière non-limitative, un exemple concret de mise en œuvre du procédé de détection est détaillé ci-après parallèlement à la description du procédé et du système de détection 5. Dans cet exemple, les premier et deuxième fichiers texte de l'ensemble de fichiers texte sont des courriels $D_1$, $D_2$. Ces courriels d'illustration sont restitués ci-après :

$D_1$: « *We shall arrange a preliminary interview for trader position with this person. I have* some *availability next week. Can you contact him to define a time slot ?* »

$D_2$: « *Another interview should be set with him. Last week* a *student forum was held and i probably found other potential candidates. I have set up* some *time slots with them for this week and I will send you my feedback concerning my preliminary interviews with them.* »

Les courriels $D_1$ et $D_2$ précédents sont rédigés en anglais. Il doit bien entendu être compris ici que la langue des fichiers texte n'a pas d'importance et ne change pas le principe du procédé de détection mis en œuvre par le système de détection 5.

Comme illustré en **[Fig. 1]**, le système de détection 5 comprend un module d'étiquetage 13, un module de regroupement 15, un module de corrélation 17 et une base de données lexicale 19.

Préalablement, dans une sous-étape S21, le système de détection 5 applique un prétraitement au moins aux premier et deuxième fichiers texte.

Par exemple le prétraitement comprend une ou plusieurs des opérations suivantes : lemmatisation, détection de mots composés, suppression de mots vides, détection de mots redondants, remplacement de valeurs numériques par une étiquette et remplacement de noms propres par une étiquette. Le prétraitement peut également comprendre la détection de blocs textuels, par exemple des paragraphes, redondants et, le cas échéant, la suppression de tels blocs textuels redondants.

La lemmatisation consiste à remplacer les occurrences des lexèmes sujets à flexion par leur entrée lexicale commune, également appelée « forme canonique » ou « lemme ».

Dans le cadre de l'exemple concret développé ici, l'application de la lemmatisation au courriel $D_2$ permet de remplacer les termes au pluriel *« candidates »*, *« slots »* et *« interviews »* par leurs formes canoniques respectives, à savoir leurs formes au singulier. Ces termes sont donc remplacés, au cours du prétraitement respectivement par les termes « *candidate* », « *slot* » et « *interview* ». De même, la forme au passé « *held* » est remplacé par la forme infinitive « *hold* », tandis que « *concerning* » est remplacé par « *concern* ».

Les mots vides (aussi connus sous le terme anglophone « *stop words* ») désignent des mots communs ne présentant aucun ou peu d'intérêt dans le cadre de la détection d'un motif commun à des fichiers texte. Typiquement, les mots vides peuvent désigner les articles, les prépositions, les pronoms, les verbes de modalité, les auxiliaires ou encore les conjonctions. Il convient de noter que les mots vides supprimés peuvent dépendre du contexte et notamment de l'objet des fichiers texte traités.

Dans l'exemple concret, l'application de la suppression des mots vides au courriel $D_1$ permet de supprimer les termes suivants : « *we* », « *shall* », « a », « *for* », « *with* », « *this* », « *I* », « *have* », « some », « *next* », « *can* », « *you* », « *him* », « *to* » et « a ».

Les courriels $D_1$ et $D_2$ obtenus à l'issue du prétraitement sont alors :

$D_1$: « *arrange preliminary interview trader position person availability week contact define time slot* ».

$D_2$: « *interview set student forum hold probably find potential candidate set time slot send feedback concern preliminary interview* ».

Le module d'étiquetage 13 est agencé pour générer, pour au moins une paire d'un premier et d'un deuxième fichiers texte de l'ensemble de fichiers texte, un ou plusieurs groupes de mots des premier et deuxième fichiers texte.

Chaque groupe de mots comprend au moins un mot du premier fichier texte et au moins un mot du deuxième fichier texte, les mots d'un même groupe de mots ayant une même fonction syntaxique. Par ailleurs, chaque mot d'un groupe de mots appartient au moins à un ensemble de mots synonymes pour cette fonction syntaxique d'un autre mot de ce groupe de mots.

La base de données lexicale 19 est agencée pour stocker un ensemble de mots et pour stocker, en association avec chacun de ces mots, un ou plusieurs ensembles de mots synonymes. Plus exactement, chaque mot est associé à au moins autant d'ensembles de mots qu'il peut avoir de fonction syntaxique dans un texte. Ainsi, si un mot peut tout aussi bien occuper une fonction de nom dans un texte ou une fonction de verbe, alors la base de données lexicale 19 stocke au moins un ensemble de noms synonymes associé à ce mot ainsi qu'un ensemble de verbes synonymes associé à ce mot.

Pour la langue anglaise, la base de données lexicale est, par exemple, la base de données *WordNet.*

On comprend ici que par l'expression « ensemble des mots synonymes d'un mot donné pour la fonction syntaxique de ce mot » désigne l'ensemble des mots, stocké dans la base de données lexicale 19, associé à ce mot pour une fonction syntaxique de ce mot. Ainsi, le module d'étiquetage 13 est agencé pour déterminer la fonction syntaxique d'un mot d'un fichier texte et pour chercher, dans la base de données lexicale 19, un ensemble de mots synonymes de ce mot lorsque ce dernier a la fonction syntaxique déterminée par le module d'étiquetage 13.

Ainsi, dans une deuxième sous-étape S22, le module d'étiquetage 13 génère, au moins pour le premier et le deuxième fichiers texte de l'ensemble de fichiers texte, un ou plusieurs groupes de mots vérifiant chacun :

[Math 1]

$$G = \{w_i\}_{i \in [\![1,N]\!]}$$

[Math 2]

$$\forall i, j \in [\![1, N]\!], F_s(w_i) = F_s(w_j) = t$$

[Math 3]

$$\forall i \in [\![1, N]\!], \exists j \in [\![1, N]\!] \; e \; j \neq i, w_i \in F_s(w_j, t)$$

[Math 4]

$$\forall i \in [\![1, N]\!], w_i \in D_1 \text{ ou } w_i \in D_2$$

[Math 5]

$$\exists i, j \in [\![1, N]\!], w_i \in D_1 \text{ et } w_j \in D_2$$

où : ◦ GW est un groupe de mots,
◦ N est le cardinal du groupe de mots GW, N étant supérieur ou égal à deux,
◦ $F_{sx}(w_i)$ est la fonction syntaxique d'un mot $w_i$ d'un fichier texte, tous les mots d'un même groupe de mots GW ayant la même fonction syntaxique t,
◦ $F_{sy}(w_i, t)$ est un ensemble de mots synonymes de $w_i$ pour la fonction syntaxique t du mot $w_i$, et
◦ $D_1$ et $D_2$ sont respectivement le premier et le deuxième fichiers texte,

Concernant de nouveau l'exemple concret développé ici, le module d'étiquetage 13 détermine donc tout d'abord la fonction syntaxique de chaque mot des courriels $D_1$ et $D_2$. La fonction syntaxique de chaque mot est indiquée entre parenthèses ci-après :

$D_1$: « *arrange* (verbe) *preliminary* (adjectif) *interview* (nom) *trader* (nom) *position* (nom) *person* (nom) *availability* (nom) *week* (nom) *contact* (verbe) *define* (verbe) *time* (nom) *slot* (nom) ».

$D_2$: « *interview* (nom) *set* (verbe) *student* (nom) *forum* (nom) *hold* (verbe) *probably* (adverbe) *find* (verbe) *potential* (adjectif) *candidate* (nom) *set* (verbe) *time* (nom) *slot* (nom) *send* (verbe) *feedback* (nom) *concern* (verbe) *preliminary* (adjectif) *interview* (nom) ».

Dans un ou plusieurs modes de réalisation, au cours de la sous-étape S22, le module d'étiquetage 13 génère le ou les groupes de mots de la manière suivante.

Pour tout mot donné du premier fichier texte, s'il existe un mot du deuxième fichier texte tel que le mot donné du premier fichier texte et le mot du deuxième fichier texte ont la même fonction syntaxique et que l'un parmi le mot donné du premier fichier texte et le mot du deuxième fichier texte appartient à un ensemble de mots synonymes de l'autre pour cette fonction syntaxique, le module d'étiquetage 13 classe le mot donné du premier fichier texte et le mot du deuxième fichier texte dans un même groupe de mots.

En d'autres termes :

[Math 6]

$$\forall w_1 \in D_1, \text{si } \exists\, w_2 \in D_2 \text{ tel que: } F_s(w_1) = F_s(w_2) = t$$

[Math 7]

$$\text{et } w_2 \in F_s(w_1, t)o \quad w_1 \in F_s(w_2, t)$$

Alors $w_1$ et $w_2$ sont classés dans un même groupe de mots GW.

où : ∘ $w_1$ est un mot donné du premier fichier texte $D_1$, et
∘ $w_2$ est un mot du deuxième fichier texte $D_2$.

Ainsi, concernant les courriels $D_1$ et $D_2$, les ébauches de groupes obtenues sont listées dans le tableau ci-après :

[Table 1]

| Groupes | Mots |
|---------|------|
| GW1 | *arrange, set, set* |
| GW2 | *preliminary, preliminary* |
| GW3 | *interview, interview* |
| GW4 | *define, set, set* |
| GW5 | *time, time* |
| GW6 | *slot, slot* |

Dans le tableau précédant, le groupe GW2 comprend deux mots : le mot « *preliminary* » issu du premier courriel $D_1$ et le mot « *preliminary* » issu du deuxième courriel $D_2$. En effet, ces deux mots ont la même fonction syntaxique, à savoir la fonction adjectif, et le mot « *preliminary* » du premier courriel $D_1$ est bien entendu un adjectif synonyme du mot « *preliminary* » du deuxième courriel $D_2$, puisqu'il s'agit en fait du même mot.

Ensuite, pour tout mot donné du premier ou du deuxième fichier texte, s'il existe un groupe de mots tel que la fonction syntaxique du mot donné est la même que la fonction syntaxique des mots de ce groupe de mots et que le mot donné appartient à l'ensemble de mots synonymes pour cette fonction syntaxique d'au moins un des mots de ce groupe de mots, le module d'étiquetage 13 classe le mot donné dans ce groupe de mots. Les groupes de mots ébauchés précédemment sont ainsi complétés.

En d'autres termes :

[Math 8]

$$\forall w \in D_1 \cup D_2$$

[Math 9]

$$\text{si } \exists \ G \quad = \{w_i\}_{i \in [\![1,N]\!]} \text{ avec } F_s'(w_i) = t \ \forall i \in [\![1,N]\!]$$

tel que:

[Math 10]

$$F_s'(w) = t \text{ et } \exists \ i \in [\![1,N]\!] \text{ tel que } w \in F_s'(w_i, t)$$

Alors w est classé dans le groupe GW.

Concernant les courriels $D_1$ et $D_2$, les groupes obtenus sont listés dans le tableau ci-après :

[Table 2]

| Groupes | Mots |
|---------|------|
| GW1 | *arrange, set, set, define* |
| GW2 | *preliminary, preliminary* |
| GW3 | *interview, interview* |
| GW4 | *define, set, set, arrange* |
| GW5 | *time, time* |
| GW6 | *slot, slot* |

Dans le tableau précédent, le groupe GW1 qui comprenait « *arrange* » et « *set* » est complété avec « *define* » puisque « *define* » a la même fonction syntaxique que « *arrange* » et « *set* », à savoir la fonction verbe, et appartient à l'ensemble des verbes synonymes de « *set* ».

Enfin, si deux groupes de mots sont identiques, le module d'étiquetage 13 supprime l'un quelconque des deux groupes de mots.

Dans l'exemple développé ici, le module d'étiquetage 13 détecte que les groupes de mots GW1 et GW4 sont identiques. Le module d'étiquetage 13 supprime alors, par exemple, le groupe de mots GW4. Les groupes de mots ainsi formés par le module d'étiquetage 13 sont donc les groupes de mots listés dans le tableau ci-après :

[Table 3]

| Groupes | Mots |
|---------|------|
| GW1 | *arrange, set, set, define* |
| GW2 | *preliminary, preliminary* |
| GW3 | *interview, interview* |
| GW5 | *time, time* |
| GW6 | *slot, slot* |

Enfin, toujours au cours de la sous-étape S22, le module d'étiquetage 13 associe à chaque mot appartenant à un groupe de mots une étiquette représentative de ce groupe de mots.

Ainsi par exemple, dans le premier courriel $D_1$, les mots « *arrange* » et « *define* » sont associés à une étiquette GW1, le mot « *preliminary* » est associé à une étiquette GW2, le mot « *interview* » est associé à une étiquette GW3, le mot « *time* » est associé à une étiquette GW5 et le mot « *slot* » est associé à une étiquette GW6.

De même, dans le deuxième courriel $D_2$, les mots « *set* » et « *set* » sont associés à une étiquette GW1, le mot « *preliminary* » est associé à une étiquette GW2, le mot « *interview* » est associé à une étiquette GW3, le mot « *time* » est associé à une étiquette GW5 et le mot « *slot* » est associé à une étiquette GW6.

A noter que, par souci de simplification, l'étiquette attribuée à un mot dans cet exemple correspond simplement au nom du groupe de mots correspondant dans le tableau précédent.

Le module de regroupement 15 est agencé pour générer, pour chaque fichier texte parmi les premier et deuxième fichiers texte, au moins un ensemble dense de mots du fichier texte.

Chaque mot d'un ensemble dense de mots d'un fichier texte est associé à une étiquette. Par ailleurs, un ensemble dense de mots d'un fichier texte vérifie une condition de proximité interne au fichier texte considéré.

Ainsi, lors d'une sous-étape S23, le module de regroupement 15 génère, pour chacun des premier et deuxième fichiers texte $D_1$ et $D_2$, au moins un ensemble dense de mots.

Pour ce faire, le module de groupement 15 attribue, à chaque mot d'un fichier texte donné, une valeur numérique représentative d'une position de ce mot au sein du fichier texte considéré.

On comprend donc ici que, à ce stade du procédé de détection correspondant à l'étape S2 du procédé de classification, chaque mot d'un fichier texte appartenant à un groupe de mots est associé non seulement à une étiquette représentative du groupe de mot auquel il appartient mais aussi à une valeur numérique représentative de sa position au sein du fichier texte. En revanche, un mot d'un fichier texte n'appartenant à aucun groupe de mot, par exemple le mot « *person* » dans le courriel $D_1$ ou le mot « *send* » dans le courriel $D_2$, n'est associé qu'à une valeur numérique représentative de sa position au sein du fichier texte.

La valeur numérique représentative d'une position d'un mot au sein d'un fichier texte est par exemple déterminée en fonction d'un rang de ce mot donné dans la suite ordonnée de mots du fichier texte.

Avantageusement, dans un tel mode de réalisation, le rang d'un mot au sein d'un fichier texte est le rang de ce mot après la sous-étape S21 de prétraitement du fichier texte.

En considérant à nouveau l'exemple des premier et deuxième courriels $D_1$, $D_2$ développé ici : chaque mot d'un courriel parmi $D_1$ et $D_2$ après prétraitement est associé à une valeur numérique représentative de son rang au sein de ce courriel prétraité. Le rang d'un mot donné correspond, par exemple, au nombre de mots précédant le mot donné. En effet, il est considéré dans le contexte de l'invention que les mots d'un fichier texte sont ordonnés.

La valeur numérique associée à chaque mot est indiquée entre parenthèses ci-après :

$D_1$: « *arrange* (0) *preliminary* (1) *interview* (2) *trader* (3) *position* (4) *person* (5) *availability* (6) *week* (7) *contact* (8) *define* (9) *time* (10) *slot* (11) ».

$D_2$: « *interview* (0) *set* (1) *student* (2) *forum* (3) *hold* (4) *probably* (5) *find* (6) *potential* (7) *candidate* (8) *set* (9) *time* (10) *slot* (11) *send* (12) *feedback* (13) *concern* (14) *preliminary* (15) *interview* (16) ».

Par exemple, dans le premier courriel $D_1$, le mot « *interview* » est associé à la fois à l'étiquette GW3 puisque ce mot a été classé dans un groupe caractérisé par l'étiquette GW3, et à la valeur numérique 2, puisque deux mots, à savoir « *arrange* » et « *preliminary* », précédent le mot «interview» dans le premier courriel $D_1$ prétraité.

Ensuite, toujours au cours de la sous-étape S23, le module de regroupement 15 génère, pour un fichier texte donné, au moins un ensemble dense de mots du fichier texte comme suit :

- si la valeur absolue de la différence des valeurs numériques respectivement associées à deux mots est inférieure ou égale à un seuil prédéterminé, le module de regroupement 15 classe ces deux mots dans un même ensemble dense de mots du fichier texte,
- sinon, le module de regroupement 15 classe ces deux mots dans des ensembles denses de mots distincts du fichier texte.

En d'autres termes :

[Math 11]

$$s_i \quad w_1 e \quad w_2 \in D, s_i \quad |V[w_1] - V[w_2]| \leq M$$

Alors $w_1$ et $w_2$ sont classés dans un même ensemble dense EX.

où : ◦ $w_1$ et $w_2$ sont des mots, associés chacun à une étiquette, d'un fichier texte D parmi les premier et deuxième fichiers texte $D_1$ et $D_2$,
◦ $V[w_1]$ et $V[w_2]$ sont les valeurs numériques représentatives des positions respectives des mots $w_1$ et $w_2$ au sein du fichier texte D1, et
◦ M est une valeur de seuil prédéterminée,

En référence à nouveau à l'exemple du premier courriel D$_1$ et du deuxième courriel D$_2$, ces deux courriels sont restitués ci-après avec, pour chaque mot, la valeur numérique associée ainsi que, pour les mots concernés, l'étiquette attribuée par le module d'étiquetage 13 :

D$_1$: « *arrange* (0, GW1) *preliminary* (1, GW2) *interview* (2, GW3) *trader* (3) *position* (4) *person* (5) *availability* (6) *week* (7) *contact* (8) *define* (9, GW1) *time* (10, GW5) *slot* (11, GW6) »

D$_2$: « *interview* (0, GW3) *set* (1, GW1) *student* (2) *forum* (3) *hold* (4) *probably* (5) *find* (6) *potential* (7) *candidate* (8) *set* (9, GW1) *time* (10, GW5) *slot* (11, GW6) *send* (12) *feedback* (13) *concern* (14) *preliminary* (15, GW2) *interview* (16, GW3) »

Par ailleurs, la valeur de seuil M prédéterminée est par exemple égale à 3.

Le module de regroupement 15 génère ainsi les ensembles denses de mots listés dans les tableaux ci-après:
Pour le premier courriel D$_1$ :

[Table 4]

| Ensembles denses | Mots |
|---|---|
| EX1 | *arrange* (0, GW1) *preliminary* (1, GW2) *interview* (2, GW3) |
| EX2 | *define* (9, GW1) *time* (10, GW5) *slot* (11, GW6) |

Pour le deuxième courriel D$_2$ :

[Table 5]

| Ensembles denses | Mots |
|---|---|
| EX3 | *interview* (0, GW3) *set* (1, GW1) |
| EX4 | *set* (9, GW1) *time* (10, GW5) *slot* (11, GW6) |
| EX5 | *preliminary* (15, GW2) *interview* (16, GW3) |

Le module de corrélation 17 est agencé pour déterminer, pour au moins une paire d'un ensemble dense de mots du premier fichier texte et d'un ensemble dense de mots du deuxième fichier texte, au moins un motif commun aux premier et deuxième fichiers texte.

Chaque motif commun inclut un ou plusieurs ensembles de mots.

Chaque ensemble de mots comprend au moins un mot de l'ensemble dense de mots du premier fichier texte et au moins un mot de l'ensemble dense de mots du deuxième fichier texte. Par ailleurs, les mots d'un même ensemble de mots partagent la même étiquette. Enfin, pour un ensemble de mots d'un motif commun associé à une paire donnée d'un ensemble dense de mots du premier fichier texte et d'un ensemble dense de mots du deuxième fichier texte,les mots de cet ensemble de mots appartiennent à l'ensemble dense de mots du premier fichier texte ou à l'ensemble dense de mots du deuxième fichier texte.

Ainsi, lors d'une sous-étape S24, le module de corrélation 17 détermine un ou plusieurs motifs communs, un motif commun étant déterminé pour chaque paire d'un ensemble dense de mots du premier fichier texte et d'un ensemble de mots du deuxième fichier texte.

En d'autres termes, le module de corrélation 17 détermine un ou plusieurs motifs communs aux premier et deuxième fichiers texte comme suit :

[Math 12]

$$P_{p,q} = \left\{ E_{L_{i(p,q)}} \right\}$$

[Math 13]

$$E_{L_{i(p,q)}} = \left\{ w_l \in E_p \cup E_q \text{ tel que } L[w_l] = L_{i}(p,q) \right\}$$

où : ∘ PTRN$_{p,q}$ est le motif commun obtenu à partir du p-ième ensemble dense de mots EX$_p$ du premier fichier texte D$_1$ et du q-ième ensemble dense de mots EX$_q$ du deuxième fichier texte D$_2$,
∘ Labi(p,q) est la i-ème étiquette vérifiant :

[Math 14]

$$\exists\, w_1 \in E_p \text{ et } \exists w_2 \in E_q \text{ tels que } L[w_1] = L[w_2] = L_i(p,q),$$

∘ L[w$_1$] et L[w$_2$] sont les étiquettes respectives des mots w$_1$ et w$_2$ appartenant respectivement aux ensembles denses de mots EX$_p$ et EX$_q$, et
∘ E$_{Labi(p,q)}$ est l'ensemble des mots de EX$_p$ et de EX$_q$ partageant la même étiquette Labi(p,q) et comprenant au moins un mot appartenant à EX$_p$ et au moins un mot appartenant à EX$_q$.

Concernant les premiers et deuxième courriels D$_1$ et D$_2$, le module de corrélation 17 analyse en tout six couples d'ensembles denses puisque le module de regroupement 15 a généré deux ensembles denses EX$_1$ et EX$_2$ de mots du premier courriel D$_1$ et trois ensembles denses EX$_3$, EX$_4$ et EX$_5$ de mots du deuxième courriel D$_2$. Pour chaque couple, un motif commun au plus peut être déterminé.

Par exemple, on considère le couple formé par l'ensemble dense EX$_1$ du premier courriel D$_1$ et l'ensemble dense EX$_3$ du deuxième courriel D$_2$. Le module de corrélation 17 cherche tout d'abord la ou les étiquettes présentes à la fois dans les deux ensembles denses EX$_1$ et EX$_3$. Les étiquettes GW1 et GW3 sont présentes dans les deux ensembles denses EX$_1$ et EX$_3$. En revanche, l'étiquette GW2 n'est présente que dans l'ensemble dense EX$_1$. Le module de corrélation 17 détermine donc un motif commun. Ce motif commun est un ensemble de deux ensembles de mots (un ensemble de mots correspond à l'étiquette GW1 et un ensemble de mots correspond à l'étiquette GW3). Le motif commun déterminé est donc le suivant : {arrange,set}, {interview}

Toujours à titre d'exemple, on considère cette fois-ci le couple formé par l'ensemble dense EX$_2$ du premier courriel D$_1$ et l'ensemble dense EX$_5$ du deuxième courriel D$_2$. Le module de corrélation 17 cherche, tout d'abord, la ou les étiquettes présentes à la fois dans les deux ensembles denses EX$_2$ et EX$_5$. Ici, il n'y en a pas. En effet, les étiquette GW1, GW5 et GW6 ne sont présentes que dans l'ensemble dense EX$_2$, tandis que les étiquettes GW2 et GW3 ne sont présentes que dans l'ensemble dense EX$_5$. Le module de corrélation 17 ne détermine donc, pour ce couple d'ensembles denses, aucun motif commun.

Les motifs communs déterminés par le module de corrélation 17 pour les premier et deuxième courriels D$_1$ et D$_2$ sont listés dans le tableau ci-après :

[Table 6]

| Motifs communs | Ensembles de mots |
|---|---|
| PTRN$_{1,3}$ | {arrange,set}, {interview} |
| PTRN$_{1,4}$ | {arrange, set} |
| PTRN$_{1,5}$ | {preliminary}, {interview} |
| PTRN$_{2,3}$ | {define,set} |
| PTRN$_{2,4}$ | {define,set}, {time}, {slot} |

Optionnellement, dans d'une sous-étape S25, le module de corrélation 17 supprime les motifs communs incluant moins de deux ensembles de mots. Un tel filtrage permet de ne conserver que les motifs communs les plus significatifs.

Dans l'exemple développé ici, le module de corrélation 17 supprime donc les motifs communs PTRN$_{1,4}$ et PTRN$_{2,3}$ qui ne comprennent chacun qu'un seul ensemble de mots. Les motifs communs restants à l'issue de cette sous-étape S25 sont listés dans le tableau ci-après :

[Table 7]

| Motifs communs | Ensembles de mots |
|---|---|
| PTRN$_{1,3}$ | {arrange,set}, {interview} |
| PTRN$_{1,5}$ | {preliminary}, {interview} |
| PTRN$_{2,4}$ | {define,set}, {time}, {slot} |

Comme expliqué précédemment, le système de détection 5 comprend plusieurs modules, à savoir le module d'étiquetage 13, le module de regroupement 15 et le module de corrélation 17. Chaque module comprend typiquement une mémoire et un processeur. La mémoire d'un module est agencée pour stocker des instructions dont la mise en œuvre, par le processeur, se traduit par le fonctionnement du module.

Avantageusement, dans une sous-étape S26, la base de données de motifs 7 est mise à jour par comparaison de chaque ensemble de mots d'un motif commun d'une paire de fichiers texte à chaque ensemble de mots d'un motif commun d'une autre paire de fichiers texte.

Par exemple, si un ensemble de mots d'un motif commun d'une première paire de fichiers texte est compris dans un ensemble de mots d'un motif commun d'une deuxième paire de fichiers texte, l'ensemble de mots du motif commun de la première paire de fichiers texte est complété avec un ou plusieurs mots manquants issus de l'ensemble de mots du motif commun de la deuxième paire de fichiers texte.

En effet, comme décrit précédemment, la détection de motifs communs dans un ensemble de fichiers texte est mise en œuvre par paire de fichiers texte. Ainsi, plutôt que de tester toutes les paires possibles de fichiers texte, la mise à jour proposée permet d'étendre chaque motif commun détecté pour une paire de fichiers texte à l'ensemble des fichiers texte.

Par exemple, le système de détection 5 est agencé pour mettre à jour la base de données de motifs 7.

Enfin, dans une sous-étape S27, les motifs communs stockés dans la base de données de motifs 7 sont filtrés en fonction de leurs fréquences d'apparition respectives. Ainsi, un motif commun est supprimé de la base de données de motifs 7 si sa fréquence d'apparition sur l'ensemble de fichiers texte est inférieure à une fréquence-seuil prédéterminée.

Par exemple, le système de détection 5 est agencé pour filtrer les motifs communs en fonction des fréquences d'apparition respectives de ces motifs communs.

Un tel filtrage permet de ne conserver que les motifs les plus pertinents sur l'ensemble des fichiers texte et de supprimer les motifs ponctuels seulement communs à quelques paires de fichiers texte marginales par rapport à l'ensemble de fichiers texte.

La présente invention présente plusieurs avantages.

Le procédé de détection de motifs communs dans un ensemble de fichiers texte proposé permet de prendre en compte les variations dans les positions relatives et la dispersion des mots communs et de leurs synonymes d'un fichier texte à un autre. La prise en compte de la fonction syntaxique des mots permet de ne pas générer de bruit avec des motifs communs fortuits tandis que l'utilisation d'une base de données lexicale permet de ne pas passer à côté de motifs communs exprimés par des séquences de mots différentes.

Par ailleurs, l'application du procédé de détection de motifs communs dans un ensemble de fichiers texte à des courriels reçus par une messagerie électronique permet une classification automatique des courriels.

Enfin, puisque la classification obtenue est basée sur le contenu textuel des courriels et non sur des éléments habituellement dédiés à la classification comme le champ « objet » des courriels, cette classification est plus pertinente et peut permettre la construction d'une base de données de motifs exploitable pour, par exemple, caractériser textuellement une activité professionnelle ou une thématique quotidienne.

**Revendications**

1. Procédé de détection d'un motif commun dans un ensemble de fichiers texte, chaque fichier texte comprenant une suite ordonnée de mots, mis en œuvre par des moyens informatiques et comprenant :

   - générer (S22), pour au moins une paire d'un premier et d'un deuxième fichiers texte ($D_1$, $D_2$) de l'ensemble de fichiers texte, un ou plusieurs groupes de mots comprenant chacun au moins un mot du premier fichier texte et au moins un mot du deuxième fichier texte, les mots d'un même groupe de mots ayant une même fonction syntaxique, et chaque mot d'un groupe de mots appartenant à un ensemble de mots synonymes pour cette fonction syntaxique d'un autre mot dudit groupe de mots,
   - associer à chaque mot d'un groupe de mots généré, une étiquette représentative dudit groupe de mots,
   - générer (S23), pour chaque fichier texte parmi lesdits premier et deuxième fichiers texte, au moins un ensemble dense de mots associés à une étiquette et vérifiant une condition de proximité interne audit fichier texte,
   - déterminer (S24) au moins un motif commun aux premier et deuxième fichiers texte, un motif commun incluant un ou plusieurs ensembles de mots partageant la même étiquette et comprenant au moins un mot d'un ensemble dense de mots de chaque fichier texte parmi lesdits premier et deuxième fichiers texte.

2. Procédé selon la revendication 1, comprenant en outre un prétraitement (S21) au moins desdits premier et deuxième fichiers texte mis en œuvre avant la génération du ou des groupe de mots, ledit prétraitement comprenant une ou plusieurs des opérations suivantes : lemmatisation, détection de mots composés, suppression de mots vides, détection de mots redondants, remplacement de valeurs numériques par une étiquette, remplacement de noms propres par une étiquette et détection et suppression de blocs textuels redondants.

3.  Procédé selon la revendication 1 ou 2, dans lequel la génération du ou des groupes de mots comprend :

    - pour tout mot donné du premier fichier texte, s'il existe un mot du deuxième fichier texte tel que le mot donné du premier fichier texte et le mot du deuxième fichier texte ont la même fonction syntaxique et que l'un parmi le mot donné du premier fichier texte et le mot du deuxième fichier texte appartient à un ensemble de mots synonymes de l'autre pour ladite fonction syntaxique, classer le mot donné du premier fichier texte et le mot du deuxième fichier texte dans un même groupe de mots,
    - pour tout mot donné du premier ou du deuxième fichier texte, s'il existe un groupe de mots tel que la fonction syntaxique du mot donné est la même que la fonction syntaxique des mots dudit groupe de mots et que le mot donné appartient à l'ensemble de mots synonymes pour ladite fonction syntaxique d'au moins un des mots dudit groupe de mots, classer le mot donné dans ledit groupe de mots, et
    - si deux groupes de mots sont identiques, supprimer l'un quelconque des deux groupes de mots.

4.  Procédé selon l'une des revendications précédentes, chaque mot d'un fichier texte donné parmi lesdits premier et deuxième fichiers texte étant associé à une valeur numérique représentative d'une position dudit mot au sein dudit fichier texte,
    dans lequel la génération, pour un fichier texte, d'au moins un ensemble dense de mots dudit fichier texte, est mise en œuvre comme suit :

    si la valeur absolue de la différence des valeurs numériques respectivement associées à deux mots est inférieure ou égale à un seuil prédéterminé, classer lesdits deux mots dans un même ensemble dense de mots dudit fichier texte,
    sinon, classer lesdits deux mots dans des ensembles denses de mots distincts dudit fichier texte.

5.  Procédé selon la revendication 4, dans lequel la valeur numérique représentative d'une position d'un mot au sein d'un fichier texte est déterminée en fonction d'un rang dudit mot donné dans la suite ordonnée de mots dudit fichier texte.

6.  Procédé selon l'une des revendications précédentes, comprenant en outre la suppression (S25) des motifs communs incluant moins de deux ensembles de mots.

7.  Procédé selon l'une des revendications précédentes, dans lequel l'ensemble des synonymes d'un mot en fonction de sa fonction syntaxique est déterminé par une recherche dans une base de données lexicale (19).

8.  Procédé selon l'une des revendications précédentes, comprenant en outre la mise à jour (S26) d'une base de données de motifs (7) par comparaison de chaque ensemble de mots d'un motif commun d'une paire de fichiers texte à chaque ensemble de mots d'un motif commun d'une autre paire de fichiers texte.

9.  Procédé selon la revendication 8, dans lequel la mise à jour de la base de données de motifs comprend : si un ensemble de mots d'un motif commun d'une première paire de fichiers texte est compris dans un ensemble de mots d'un motif commun d'une deuxième paire de fichiers texte, compléter l'ensemble de mots du motif commun de la première paire de fichiers texte avec un ou plusieurs mots manquants issus de l'ensemble de mots du motif commun de la deuxième paire de fichiers texte.

10. Procédé selon l'une des revendications précédentes, comprenant en outre le filtrage (S27) des motifs communs en fonction d'une fréquence d'apparition desdits motifs communs, un motif commun étant supprimé si sa fréquence d'apparition sur l'ensemble de fichiers texte est inférieure à une fréquence-seuil prédéterminée.

11. Procédé de classification de fichiers texte comprenant :

    - recevoir (S1) un ensemble de fichiers texte,
    - détecter (S2), pour au moins une paire d'un premier et d'un deuxième fichiers texte ($D_1$, $D_2$) de l'ensemble de fichiers texte, au moins un motif commun en utilisant le procédé de détection selon l'une des revendications précédentes,
    - stocker (S3) chaque motif commun détecté dans une base de données de motifs (7),

- générer (S4) une étiquette, dite label, caractéristique d'un ensemble de motifs stockés au sein de la base de données de motifs, et
- classer (S5) chaque fichier texte dans une base de données de fichiers texte (11) en fonction d'un label associé à un ensemble de motifs comprenant au moins un motif détecté dans ledit ficher texte.

**12.** Procédé selon la revendication 11, dans lequel un ou plusieurs fichiers texte de l'ensemble de fichiers texte sont des courriels et la base de données de fichiers texte est comprise dans une messagerie électronique.

**13.** Programme informatique comprenant des instructions pour la mise en œuvre du procédé selon l'une des revendications précédentes, lorsque lesdites instructions sont exécutées par au moins un processeur.

**14.** Système de détection (5) d'un motif commun dans un ensemble de fichiers texte, chaque fichier texte comprenant une suite ordonnée d'un ou plusieurs mots, comprenant :

- un module d'étiquetage (13) agencé pour générer, pour au moins une paire d'un premier et d'un deuxième fichiers texte ($D_1$, $D_2$) de l'ensemble de fichiers texte, un ou plusieurs groupes de mots comprenant chacun au moins un mot du premier fichier texte et au moins un mot du deuxième fichier texte, les mots d'un même groupe de mots ayant une même fonction syntaxique, et chaque mot d'un groupe de mots appartenant à un ensemble de mots synonymes pour cette fonction syntaxique d'un autre mot dudit groupe de mots, ledit module d'étiquetage étant agencé en outre pour associer à chaque mot d'un groupe de mots généré, une étiquette représentative dudit groupe de mots,
- un module de regroupement (15) agencé pour générer, pour chaque fichier texte parmi lesdits premier et deuxième fichiers texte, au moins un ensemble dense de mots associés à une étiquette et vérifiant une condition de proximité interne audit fichier texte,- un module de corrélation (17) agencé pour déterminer au moins un motif commun aux premier et deuxième fichiers texte, un motif commun incluant un ou plusieurs ensembles de mots partageant la même étiquette et comprenant au moins un mot d'un ensemble dense de mots de chaque fichier texte parmi lesdits premier et deuxième fichiers texte.

**15.** Système de classification (1) de fichiers texte comprenant :

- un module de communication (3) agencé pour recevoir un ensemble de fichiers texte,
- un système de détection (5) d'un motif commun selon la revendication 14 agencé pour détecter, pour au moins une paire d'un premier et d'un deuxième fichiers texte ($D_1$, $D_2$) de l'ensemble de fichiers texte, au moins un motif commun,
- une base de données de motifs (7) agencée pour stocker chaque motif commun détecté,
- un module de labélisation (9) agencé pour générer une étiquette, dite label, caractéristique d'un ensemble de motifs stockés au sein de la base de données de motifs,
- une base de données de fichiers texte (11) agencée pour stocker chaque fichier texte reçu par le module de communication, ledit fichier texte étant classé au sein de la base de données de fichiers texte en fonction d'un label associé à un ensemble de motifs comprenant au moins un motif détecté dans ledit fichier texte.

[Fig. 1]

FIG. 1

[Fig. 2]

FIG. 2

[Fig. 3]

FIG. 3

Europäisches
Patentamt

European
Patent Office

Office européen
des brevets

**RAPPORT DE RECHERCHE EUROPEENNE**

Numéro de la demande

EP 21 15 7504

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MUJTABA GHULAM ET AL: "Email Classification Research Trends: Review and Open Issues", IEEE ACCESS, vol. 5, 28 juin 2017 (2017-06-28), pages 9044-9064, XP011653557, DOI: 10.1109/ACCESS.2017.2702187 * abrégé * * page 9047 - page 9053 * * figure 1 * ----- | 1-15 | INV. G06F16/906 |
| X | TANG GUANTING ET AL: "Email mining: tasks, common techniques, and tools", KNOWLEDGE AND INFORMATION SYSTEMS, SPRINGER VERLAG,LONDON, GB, vol. 41, no. 1, 4 juin 2013 (2013-06-04), pages 1-31, XP035386932, ISSN: 0219-1377, DOI: 10.1007/S10115-013-0658-2 [extrait le 2013-06-04] * abrégé * * page 2 * * page 4 - page 11 * ----- | 1-15 | |

DOMAINES TECHNIQUES RECHERCHES (IPC)

G06F

Le présent rapport a été établi pour toutes les revendications

| Lieu de la recherche | Date d'achèvement de la recherche | Examinateur |
|---|---|---|
| La Haye | 25 mars 2021 | Martínez Espuche, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P04C02)